# EUROPEAN PATENT APPLICATION

(11) **EP 4 589 703 A1**
(43) Date of publication of application: **23.07.2025**
(21) Application number: 24223733.7
(22) Date of filing: 30.12.2024
(51) Int. Cl.: H01M 10/04, H01M 10/0587, H01M 50/471, H01M 50/474, H01M 50/477

(54) **ELECTRODE ASSEMBLY AND SECONDARY BATTERY INCLUDING THE SAME**

(30) Priority: 19.01.2024 KR 20240009107
(71) Applicant: SAMSUNG SDI CO., LTD., Yongin-si, Gyeonggi-do 17084 (KR)
(72) Inventor: Kim, Jiyun, 17084 Yongin-si, Gyeonggi-do (KR); Kim, Jaehyung, 17084 Yongin-si, Gyeonggi-do (KR); Kim, Yesom, 17084 Yongin-si, Gyeonggi-do (KR); Kang, Jungmin, 17084 Yongin-si, Gyeonggi-do (KR); Kim, Seung-Su, 17084 Yongin-si, Gyeonggi-do (KR); Yeo, Donggyu, 17084 Yongin-si, Gyeonggi-do (KR); Kang, Yunjeong, 17084 Yongin-si, Gyeonggi-do (KR)
(74) Representative: Michalski Hüttermann & Partner Patentanwälte mbB

(57) **Abstract**

A winding-type or kind electrode assembly includes a first electrode, a separator, and a second electrode, wherein the first electrode includes a first substrate including a front surface and a rear surface, a front first active material layer on the front surface and a rear first active material layer on the rear surface, a first end functional layer on the front surface and spaced from the front first active material layer, and a second end functional layer on the rear surface and spaced from the rear first active material layer, and a step compensation layer on the second end functional layer and corresponding to a gap between the front first active material layer and the first end functional layer, wherein the first end functional layer is wound around the electrode assembly at least once.

## Description

### BACKGROUND

### 1. Field

Embodiments of the present disclosure relate to an electrode assembly, and, for example, to an electrode assembly for a secondary battery and a secondary battery including the same.

### 2. Description of the Related Art

Secondary batteries (*e.g*., lithium batteries) are electric power storage systems that provide excellent or desired (*e.g*. relatively high) energy density by converting electrical energy into chemical energy. Compared to primary batteries, which cannot be recharged, secondary batteries can be recharged and are widely used in internet technology (IT) devices such as smartphones, laptops, and/or tablet PCs.

Recently, interest in electric vehicles has increased due to environmental issues and fossil-fuel depletion issues, and accordingly, there is a trend toward using secondary batteries in electric vehicles.

In accordance with this trend, secondary batteries are desired and/or required to have characteristics such as relatively high density (*e.g*., energy density), high power, and safety.

However, secondary batteries have an increased risk of ignition, rupture, and explosion due to external impact or charging and discharging, so installation of appropriate safety devices is likewise desired and/or required.

In order to increase the safety of a secondary battery, a ceramic layer may be additionally formed on a distal end uncoated region of the electrode assembly.

However, as the usage time of the secondary battery increases, precipitates may be generated on the ceramic layer, causing discoloration of part of the ceramic layer.

The above information disclosed is only meant to enhance understanding of the background of the described technology, and therefore it may contain information that does not constitute the prior art that would already be known to a person of ordinary skill in the art.

### SUMMARY

Aspects of one or more embodiments of the present disclosure are directed toward an electrode assembly capable of preventing or reducing discoloration of a ceramic layer to improve the safety of a secondary battery, and toward a secondary battery including the electrode assembly.

Additional aspects will be set forth in part in the description which follows and, in part, will be apparent from the description, or may be learned by practice of the presented embodiments of the disclosure.

A winding type or kind electrode assembly according to one or more embodiments of the present disclosure includes a first electrode, a separator, and a second electrode, wherein the first electrode includes a first substrate including a front surface and a rear surface, a front first active material layer on the front surface and a rear first active material layer on the rear surface, a first distal end functional layer on the front surface and spaced from the front first active material layer, and a second distal end functional layer on the rear surface and spaced from the rear first active material layer;, and a step compensation layer arranged on the second distal end functional layer and corresponding to a gap between the front first active material layer and the first distal end functional layer, wherein the first distal end functional layer winds around (*e.g*., is wound around) the electrode assembly at least once.

In one or more embodiments, the step compensation layer may be made of the same material as the second distal end functional layer.

In one or more embodiments, the first end functional layer and the second distal end functional layer may include a ceramic material.

In one or more embodiments, a thickness of the step compensation layer may be equal to or less than the thickness of the front first active material layer.

In one or more embodiments, the electrode assembly may further include an intermediate functional layer between the first substrate and the front first active material layer, and between the first substrate and the rear first active material layer, respectively.

In one or more embodiments, the intermediate functional layer may be larger than the front first active material layer and the rear first active material layer, respectively, and may expand (e.g., extend) from the front first active material layer and the rear first active material layer toward the first distal end functional layer and the second distal end functional layer, respectively.

In one or more embodiments, the step compensation layer may be formed in multiple stages (*e.g*., may have a stepped structure).

In one or more embodiments, the separator may be wound around the electrode assembly at least once together with the second distal end functional layer, and may be arranged between the gap and the step compensation layer.

In one or more embodiments, an electrode uncoated region of the second electrode may be wound around the electrode assembly at least once together with the second distal end functional layer and the separator, and may be arranged between the gap and the step compensation layer.

In one or more embodiments, the step compensation layer may decrease in width as the step compensation layer moves (*e.g*., extends) away from the first substrate.

In one or more embodiments, the first electrode may be a positive electrode and the second electrode may be a negative electrode.

By forming a step compensation layer as in one or more embodiments of the present disclosure, it is possible to provide an electrode assembly that reduces the occurrence of precipitates in the ceramic layer and the resulting discoloration phenomenon, and to provide a secondary battery including the same.

### BRIEF DESCRIPTION OF THE DRAWINGS

FIG. 1 is a schematic exploded perspective view of a secondary battery according to one or more embodiments of the present disclosure.
FIG. 2 is a schematic cross-sectional view of the electrode assembly of FIG. 1, according to one or more embodiments of the present disclosure.
FIG. 3 shows plan views and a cross-sectional view for describing a first electrode of the electrode assembly shown in FIG. 2, according to one or more embodiments of the present disclosure.
FIGs. 4 and 5 are each an enlarged cross-sectional view of a portion F of FIG. 2, according to one or more embodiments of the present disclosure.
FIG. 6 is a top plan view and a cross-sectional view for describing a second electrode of the electrode assembly shown in FIG. 2.
FIG. 7 is a cross-sectional view of an electrode assembly according to one or more embodiments of the present disclosure.
FIG. 8 is an enlarged cross-sectional view of a portion F of FIG. 7, according to one or more embodiments of the present disclosure.
FIG. 9 is a cross-sectional view of an electrode assembly according to one or more embodiments of the present disclosure.
FIG. 10 is an enlarged cross-sectional view of a portion F of FIG. 9, according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be further understood that the terms "comprises," "comprising," "includes," "including," "have," "having," "contain," and "containing," when used in this specification, specify the presence of the stated features, integers, steps, operations, elements, and/or components, but do not preclude the presence or addition of one or more other features, integers, steps, operations, elements, components, and/or groups thereof.

In addition, to facilitate understanding of the present disclosure, the accompanying drawings may not be drawn to scale, but the dimensions of some components may be exaggerated for clarity. In addition, unless otherwise noted, like reference numerals denote like elements throughout the attached drawings and the written description, and thus, duplicative descriptions thereof may not be provided.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

As used herein, the singular forms "a," "an" and "the" are intended to include the plural forms as well, unless the context clearly indicates otherwise.

Spatially relative terms, such as "on," "below," "lower," "under," "above," "upper," "front," "rear" and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (*e.g*., rotated 90 degrees or at other orientations) and the spatially relative descriptors used herein should be interpreted accordingly.

It will be understood that when an element, such as an area, layer, film, region or portion, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

The terminology used herein is for the purpose of describing particular embodiments only and is not intended to be limiting of the present disclosure.

As used herein, the term "and/or" includes any and all combinations of one or more of the associated listed items.

Descriptions of features or aspects within each embodiment should typically be considered as available for other similar features or aspects in other embodiments. Also, as used herein, the terms "use," "using," and "used" may be considered synonymous with the terms "utilize," "utilizing," and "utilized," respectively.

Hereinafter, a secondary battery according to one or more embodiments of the present disclosure will be described in more detail with reference to the attached drawings.

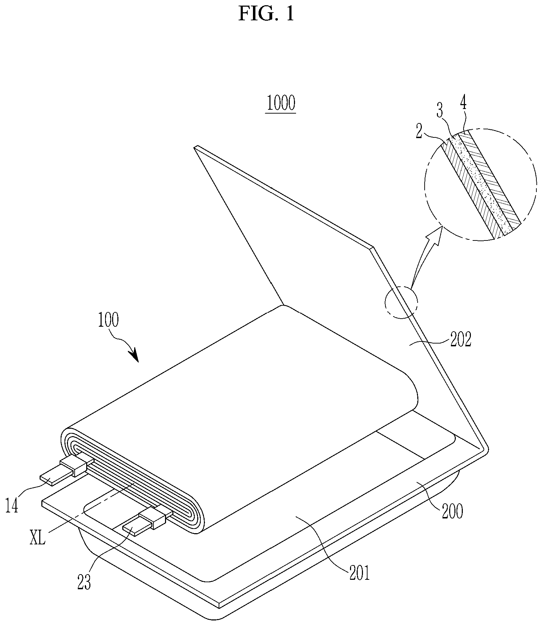

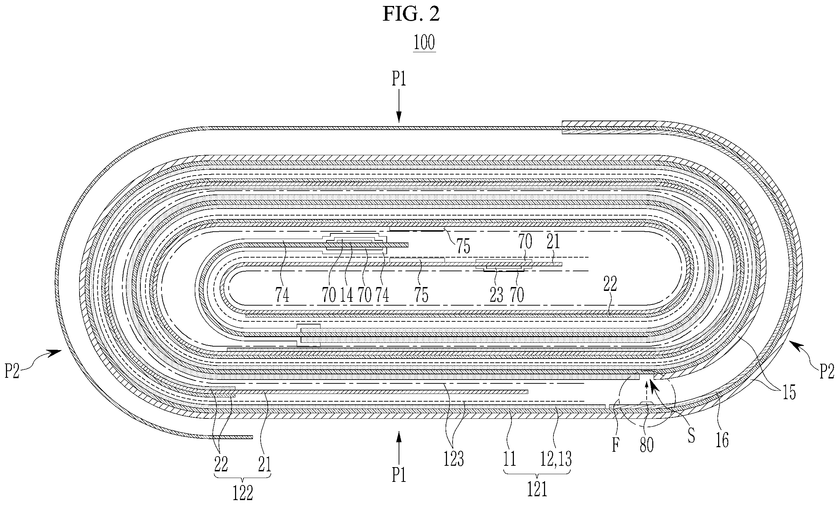

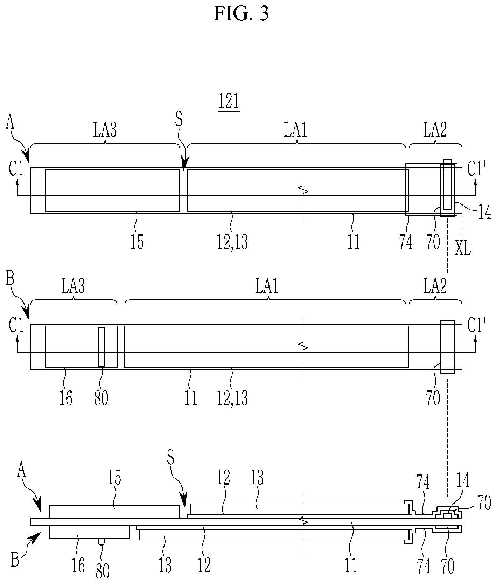

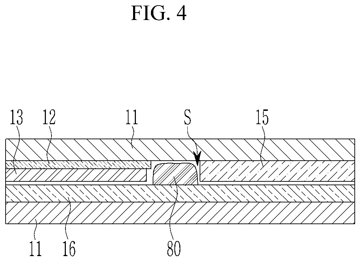

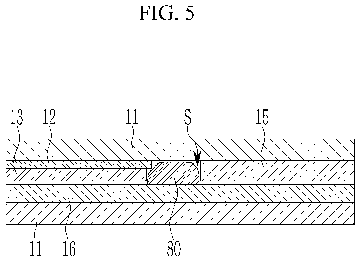

FIG. 1 is a schematic exploded perspective view of a secondary battery according to one or more embodiments of the present disclosure, FIG. 2 is a schematic cross-sectional view of the electrode assembly of FIG. 1, according to one or more embodiments of the present disclosure, FIG. 3 includes plan views and a cross-sectional view for describing a first electrode of the electrode assembly shown in FIG. 2, according to one or more embodiments of the present disclosure, and FIGs. 4 and 5 are each an enlarged cross-sectional view of a portion F of FIG. 2, according to one or more embodiments of the present disclosure.

FIG. 3 includes a plan view of each of one surface A and the other surface B of the first electrode, and the cross-sectional view is a cross-sectional view taken along the line C1-C1' in FIG. 3, according to one or more embodiments of the present disclosure.

As shown in FIG. 1, a secondary battery 1000 according to one or more embodiments of the present disclosure includes an electrode assembly 100 and a pouch 200.

Referring to FIGs. 1 and 2, the electrode assembly 100 includes a first electrode 121, a second electrode 122, and a separator 123 arranged between the first electrode and the second electrode. The separator 123 is for insulation, and the electrode assembly 100 may be stacked in this order: the first electrode 121, the separator 123, the second electrode 122, and the separator 123.

The electrode assembly 100 may be in the form of a jelly-roll in which the first electrode 121, the separator 123, and the second electrode 122 are stacked and wound around a winding axis XL. If desired and/or necessary, the electrode assembly 100 may be wound and pressed flat, and a cross-section cut in a vertical direction across the winding axis XL may have an oval shape that is long in one direction.

Accordingly, the electrode assembly 100 may include a flat part P1 that is relatively flat in a cross-sectional view (*e.g*., along a thickness direction of the electrode assembly) and a curved part P2 that is relatively round in the cross-sectional view (*e.g*., along the thickness direction of the electrode assembly). The flat part P1 may be a portion that is pressed after winding the electrode assembly 100, and the curved part P2 may connect the two opposing flat parts P1. In the electrode assembly 100, one rotation may include a pair of opposing flat parts and a pair of curved parts connected to the ends of the flat parts P1.

For example, referring to FIGs. 2, 3, and 6, the first electrode 121 includes a first electrode active part LA1, and a first electrode uncoated region LA2, and a first finishing part LA3 arranged on opposite sides of the first electrode active part LA1, the second electrode 122 includes a second electrode active part LB1 and a second electrode uncoated region LB2 arranged on opposite sides of the second electrode active part LB1.

Hereinafter, if (*e.g*., when) the band-shaped (*e.g*., shaped as a rectangle or oval, where the length of the rectangle or oval is substantially longer than the width) first and second electrodes are wound around the winding axis XL, the end adjacent to the winding axis XL is referred to as the front end, and the end arranged relatively far (*e.g*., at the opposite end from the front end) is referred to as the distal end.

Referring to FIG. 3, the first electrode active part LA1 includes a first substrate 11, an intermediate functional layer 12 formed on the first substrate 11, and a first active material layer 13 formed on the intermediate functional layer 12.

The intermediate functional layer 12 and the first active material layer 13 are formed on a surface (e.g., one or both surfaces (*e.g*., opposite surfaces)) of the substrate, such that the lengths of the first electrode active part LA1 formed on one surface A and the other surface B of the substrate 11 may be different.

The first substrate 11 provides a passage for the movement of charges generated in the first active material layer 13 and supports the first active material layer 13.

The first electrode 121 may be a positive electrode, and the first substrate 11 may have a metal thin plate with excellent or suitable conductivity-for example, aluminum foil or a mesh structure.

The intermediate functional layer 12 may include a material containing a compound represented by the following Chemical Formula 1, a compound represented by the following Chemical Formula 2, and/or a (*e.g*., any suitable) combination thereof:

Chemical Formula 1 Liₐ₁M¹ₓ₁Fe₁₋ₓ₁PO₄

In Chemical Formula 1, 0.90 ≤ a1 ≤1.5, 0 ≤ x1 ≤ 0.4, M¹ is Mg, Co, Ni, and/or a (*e.g*., any suitable) combination thereof.

Chemical Formula 2 Liₐ₂Mnₓ₂Fe₁₋ₓ₂PO₄

In Chemical Formula 2, 0.90 ≤ a2 ≤ 1.5, 0.1 ≤ x2 ≤ 1.

The compound represented by Chemical Formula 1 may be a lithium iron phosphate compound. The mole fraction of lithium in Chemical Formula 1 may be appropriately or suitably adjusted between approximately 0.9 and 1.5-for example, 0.90 ≤ a1 ≤ 1.2, or 0.95 ≤ a1 ≤ 1.1. In Chemical Formula 1, Mn may exist in addition to Fe, and the mole fraction of Mn may be 0 ≤ x1 ≤ 0.7, 0 ≤ x1 ≤ 0.5, 0 ≤ x1 ≤ 0.3, 0 ≤ x1 ≤ 0.1 or 0 ≤ x1 ≤ 0.05.

The compound represented by Chemical Formula 2 may be a lithium manganese iron phosphate compound. In Chemical Formula 2, the mole fraction of lithium may be 0.90 ≤ a2 ≤1.2 or 0.95 ≤ a2 ≤1.1, as in Chemical Formula 1. In Chemical Formula 2, the mole fraction of manganese may be 0.2 ≤ x2 ≤ 0.9, 0.3 ≤ x2 ≤ 0.9, or 0.4 ≤ x2 ≤ 0.8. In particular, if (*e.g*., when) 0.5 ≤ x2 ≤ 0.9, the lithium ion conduction ability is high.

For example, the intermediate functional layer 12 is a lithium transition metal phosphate and may include LiFePO₄, LiMn_{0.5}Fe_{0.5}PO₄, LiMnPO₄, and/or the like.

The intermediate functional layer 12 may include the one or more of the above materials and may further include a binder and/or a conductive material. Here, the content (*e.g*., amount) of the material(s) may be 80 wt% to 97 wt% based on the total weight of the first functional layer 12, the content (*e.g*., amount) of the binder may be 1 wt% to 10 wt%, and the content (*e.g*., amount) of conductive material 0.5 wt% to 10 wt%.

The binder, which may easily adhere the material particles in the first functional layer to each other and the material particles to the substrate, may include a non-water-soluble binder, a water-soluble binder, and/or a (*e.g*., any suitable) combination thereof.

The non-water-soluble binder may be selected from among polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamidoimide, polyimide, and/or a (*e.g*., any suitable) combination thereof.

The water-soluble binder may be a rubber-based binder or polymer resin binder. The rubber-based binder may be selected from among styrene-butadiene rubber (SBR), acrylated styrene-butadiene rubber, acrylonitrile-butadiene rubber (ABR), acrylic rubber, butyl rubber, fluorine rubber, and/or a (*e.g*., any suitable) combination thereof. The polymer resin binder may be selected from among polyethylene oxide, polyvinylpyrrolidone, polyepichlorohydrin, polyphosphazene, polyacrylonitrile, ethylene propylene diene copolymer, polyvinylpyridine, chlorosulfonated polyethylene, latex, polyester resin, acryl resin, phenol resin, epoxy resin, polyvinyl alcohol, and/or a (*e.g*., any suitable) combination thereof.

When the water-soluble binder is used as a binder, a cellulose-based compound may be further used to provide viscosity. The cellulose-based compound includes one or more of carboxymethyl cellulose, hydroxypropylmethyl cellulose, methyl cellulose, and/or alkali metal salts thereof. The alkali metals may be Na, K, or Li.

A conductive material is used to provide conductivity to an electrode, and the conductive material may include a carbon-based material, a metal-based material, a conductive polymer, and/or a (*e.g*., any suitable) mixture thereof.

The conductive material included in the intermediate functional layer 12 may be any electron conductive material that does not cause chemical changes in a battery including the conductive material. For example, the conductive material may include a carbon-based material such as natural graphite, artificial graphite, carbon black, acetylene black, ketjen black, a carbon fiber, and/or the like; a metal-based material of a metal powder or a metal fiber including copper, nickel, aluminum, silver, and/or the like; a conductive polymer such as a polyphenylene derivative; or any mixture thereof.

The first active material layer 13 may be formed by dispersing an electrode mixture containing a positive active material, binder, conductive material, and/or the like in a solvent to form a slurry, which is then applied to at least one surface of the first substrate 11, followed by drying and compression.

The first active material layer 13 includes a positive active material, and a compound capable of reversible intercalation and deintercalation of lithium (reversible intercalation compound) may be used as the positive active material.

Examples of positive active materials include compounds represented by any one or more (e.g., at least one) selected from among the following chemical formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90≤ a ≤1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li _{(3-f)}J₂ PO₄₃ (0 ≤ f ≤ 2);

Li _{(3-f)}Fe₂ PO₄₃ (0 ≤ f ≤ 2); and/or

LiₐFePO₄ (0.90 ≤ a ≤ 1.8).

In the above chemical formulas, A is selected from a group consisting of Ni, Co, Mn, and a (*e.g*., any suitable) combination thereof; X is selected from a group consisting of Al, Ni, Co, Mn, Cr, Fe, Mg, Sr, V, a rare earth element, and a (*e.g*., any suitable) combination thereof; D is selected from a group consisting of O, F, S, P, and a (e.g., any suitable) combination thereof; E is selected from a group consisting of Co, Mn, and a (e.g., any suitable) combination thereof; T is selected from a group consisting of F, S, P, and a (e.g., any suitable) combination thereof; G is selected from a group consisting of Al, Cr, Mn, Fe, Mg, La, Ce, Sr, V, and a (e.g., any suitable) combination thereof; Q is selected from a group consisting of Ti, Mo, Mn, and a (e.g., any suitable) combination thereof; Z is selected from a group consisting of Cr, V, Fe, Sc, Y, and a (e.g., any suitable) combination thereof; and J is selected from the group consisting of V, Cr, Mn, Co, Ni, Cu, and a (e.g., any suitable) combination thereof.

The compounds may have a coating layer on the surface or may be mixed with another compound having a coating layer. The coating layer may include at least one coating element compound selected from a group consisting of an oxide of a coating element, a hydroxide of a coating element, an oxyhydroxide of a coating element, an oxycarbonate of a coating element, and a hydroxycarbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, and/or a (*e.g*., any suitable) combination thereof. The coating layer forming process may use a method having no adverse influence on properties of the active material-for example, spray coating, dipping, and/or the like.

An example of the positive active material may include a positive active material represented by the following Chemical Formula A1:

Chemical Formula A1 Liₐ₁₁Niₓ₁₁M¹¹_{y11}M¹²_{1-x11-y12}O₂

In Chemical Formula A1, 0.9≤a11≤1.8, 0.3≤x11≤1, 0≤y11≤0.7, and M¹¹ and M¹² may each independently be selected from among Al, B, Ce, Co, Cr, F, Mg, Mn, Mo, Nb, P, S, Si, Sr, Ti, V, W, Zr, and/or a (*e.g*., any suitable) combination thereof.

In Chemical Formula A1, the ranges may be: 0.4≤x11≤1 and 0≤y11≤0.6, 0.5≤x11≤1 and 0≤y11≤0.5, 0.6≤x11≤1 and 0≤y11≤0.4, 0.7≤x11 ≤1 and 0≤y11≤0.3, 0.8≤x11≤1 and 0≤y11≤0.2, or 0.9≤x11≤1 and 0≤y11≤0.1.

As a specific example, the positive active material may include lithium nickel cobalt complex oxide, represented by the following Chemical Formula A2.

Chemical Formula A2 Liₐ₁₂Niₓ₁₂Co_{y12}M¹³_{1-x12-y12}O₂

In Chemical Formula A2, 0.9≤a12≤1.8, 0.3≤x12<1, 0<y12≤0.7, and M¹³ is selected from among Al, B, Ce, Cr, F, Mg, Mn, Mo, Nb, P, S, Si, Sr, Ti, V, W, Zr, and/or a (e.g., any suitable) combination thereof.

In Chemical Formula A2, the ranges may be: 0.3≤x12≤0.99 and 0.01≤y12≤0.7, 0.4≤x12≤0.99 and 0.01≤y12≤0.6, 0.5≤x12≤0.99 and 0.01≤12≤0.5, 0.6≤x12≤0.99 and 0.01≤y12≤0.4, 0.7≤x12≤0.99 and 0.01≤y12≤0.3, 0.8≤x12≤0.99 and 0.01≤y12≤0.2, or 0.9≤x12≤0.99 and 0.01≤y12≤0.1.

As a specific example, the positive active material may include lithium nickel cobalt complex oxide represented by the following Chemical Formula A3.

Chemical Formula A3 Liₐ₁₃Niₓ₁₃Co_{y13}M¹⁴_{z13}M¹⁵_{1-x13-y13-z13}O₂

In Chemical Formula A3, 0.9≤a13≤1.8, 0.3≤x13≤0.98, 0.01≤y13≤0.69, 0.01≤z13≤0.69, M¹⁴ is selected from among Al, Mn, and/or a (e.g., any suitable) combination thereof, and M¹⁵ is selected from among B, Ce, Cr, F, Mg, Mo, Nb, P, S, Si, Sr, Ti, V, W, Zr, and/or a (*e.g*., any suitable) combination thereof.

In Chemical Formula A3, the ranges may be: 0.4≤x13≤0.98, 0.01≤y13≤0.59, and 0.01≤z13≤0.59, 0.5≤x13≤0.98, 0.01≤y13≤0.49, and 0.01≤z13≤0.49, or 0.6≤x13 ≤0.98, 0.01≤y13≤0.39, and 0.01≤z13≤0.39, or 0.7≤x13≤0.98, 0.01≤y13≤0.29, and 0.01≤z13≤0.29, or 0.8≤x13≤0.98, 0.01≤y13≤0.19, and 0.01≤z13≤0.19, or 0.9≤x13≤0.98, 0.01≤y13≤0.09, and 0.01≤z13≤0.09.

The first active material layer 13 may include the positive active material and may further include a binder and/or a conductive material. Here, the amount of the positive active material may be 90 wt% to 98 wt%-for example, 90 wt% to 95 wt%-based on the total weight of the positive active material layer. The amount of each of the binder and the conductive material may be 1 wt% to 5 wt% based on the total weight of the positive active material layer.

The binder may serve to adhere the positive active material particles with one another and to adhere the positive active material to the functional layer or substrate, and may be the same as the binder configuring (included in) the intermediate functional layer 12.

The conductive material (e.g., conductor) may be included to provide conductivity (e.g., electron conductivity) to the electrode and may be the same as the conductive material configuring (included in) the first functional layer 12.

The first electrode uncoated region LA2 is arranged at the front end of the first electrode 121, and because a separate material layer is not formed on the first substrate 11, the surface of the first substrate 11 may be exposed, and a first electrode tab 14 for drawing current to the outside may be connected to the first substrate 11.

The first electrode tab 14 may be connected to the first electrode uncoated region LA2 by ultrasonic welding, laser welding, or resistance welding, and may protrude out of the first electrode uncoated region LA2. The first electrode tab 14 may include aluminum like the first substrate 11, and the thickness of the first electrode tab 14 may be 12µm or less.

A protective tape 70 is attached to the first electrode tab 14 to protect the first electrode tab 14. The protective tape 70 is also formed on the other surface B of the substrate 11 on which the first electrode tab 14 is not formed.. In addition, a protective tape 74 may be formed to cover the exposed substrate 11 between the first active material layer 13 and the first electrode tab 14 and may extend to cover one end of the first functional layer 12 and the first active material layer 13 to prevent or reduce (e.g., protect from) short circuiting with the second electrode 122.

The first finishing part LA3 is arranged at the distal end of the first electrode 121 relatively far from the winding axis XL, and includes the first substrate 11 and a distal end functional layers 15 and 16 formed on the first substrate 11. Distal end functional layers 15 and 16 include a ceramic material having insulating properties, are arranged at a certain distance from one end of the first active material layer 13, and are arranged on one surface A and the other surface B of the first substrate, respectively. The distal end functional layer 15 formed on one surface A of the first substrate 11 is formed relatively longer than the distal end functional layer 16 formed on the other surface B, and the first finishing part LA3 of the other surface B may be wound around the electrode assembly at least once.

The distal end functional layers 15, 16 are materials having a relatively greater resistance than the substrate 11, so that the distal end functional layers 15, 16 may be arranged between the substrates so that, in the event of an external impact, the likelihood of the battery short circuiting due to the external impact may be prevented or reduced.

The distal end functional layers 15 and 16 may include ceramics and binders.

Ceramics may include endothermic ceramics such as pseudoboehmite and boehmite, general ceramics such as aluminum oxide (AlO₃, Al₂O₃, and/or the like), silicon dioxide (SiO₂), magnesium oxide (MgO), titanium dioxide (TiO₂), hafnium oxide (HfO₂), tin oxide (SnO), cerium (IV) oxide (CeO₂), nickel oxide, (NiO), zinc oxide (ZnO), calcium oxide (CaO), zirconium oxide (ZrO₂), yttrium oxide (Y₂O₃), and silicon carbide (SiC); and/or a (*e.g*., any suitable) combination thereof.

General ceramics are insulating materials that only have insulating properties, and endothermic ceramics are endothermic materials that have insulating and endothermic properties.

The binder may include a non-water-soluble binder, a water-soluble binder, and/or a (*e.g*., any suitable) combination thereof.

The binder ensures that the materials in the ceramic layer adhere to each other and that the ceramic layer adheres to the substrate.

The non-water-soluble binder may be selected from among polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamidoimide, polyimide, and/or a (*e.g*., any suitable) combination thereof.

The water-soluble binder may be a rubber-based binder or polymer resin binder. The rubber-based binder may be selected from among styrene-butadiene rubber (SBR), acrylated styrene-butadiene rubber, acrylonitrile-butadiene rubber (ABR), acrylic rubber, butyl rubber, fluorine rubber, and/or a (*e.g*., any suitable) combination thereof. The polymer resin binder may be selected from among polyethylene oxide, polyvinylpyrrolidone, polyepichlorohydrin, polyphosphazene, polyacrylonitrile, ethylene propylene diene copolymer, polyvinylpyridine, chlorosulfonated polyethylene, latex, polyester resin, acryl resin, phenol resin, epoxy resin, polyvinyl alcohol, and/or a (*e.g*., any suitable) combination thereof.

When the water-soluble binder is used as a binder, a cellulose-based compound may be further used to provide viscosity. The cellulose-based compound includes one or more of carboxymethyl cellulose, hydroxypropylmethyl cellulose, methyl cellulose, and/or alkali metal salts thereof. The alkali metals may be Na, K, or Li.

In one or more embodiments, because the distal end functional layer 15 is formed by winding the electrode assembly at least once, the first distal end functional layer 15 formed on one surface A and the second distal end functional layer 16 formed on the other surface B may face each other. As shown in FIGs. 2 and 4, a gap S between the first active material layer 13 and the first distal end functional layer 15 formed on one surface and the second distal end functional layer 16 formed on the other surface may face each other (see, *e.g*., F in FIG. 2).

A step compensation layer 80 may be further formed on the second distal end functional layer 16. The first distal end functional layer 15 and the first active material layer 13 may be arranged spaced and/or apart (*e.g*., spaced apart or separated) from each other, and the step compensation layer 80 may correspond to the gap S between the first distal end functional layer 15 and the first active material layer 13.

Accordingly, in a winding-type or kind electrode assembly, the step compensation layer 80 may be inserted into the gap S. The step compensation layer 80 may be formed by forming the second distal end functional layer 16 and then additionally applying ceramic forming the second distal end functional layer 16 to a position corresponding to the gap S.

By forming the step compensation layer 80 by applying ceramic, the width of the step compensation layer 80 may become narrower from the bottom (e.g., the surface adjacent to the second distal end functional layer 16) to the top (e.g., the surface opposite the bottom and spaced from the second distal end functional layer 16).

The electrolyte solution filled in the empty space formed by the gap S may contact the second distal end functional layer 16 and react with the ceramic included in the second distal end functional layer 16 to generate ceramic precipitates, which may discolor the second distal end functional layer 16.

In the present disclosure, the empty space formed by the gap S is filled by the step compensation layer 80, thereby minimizing or reducing penetration of the electrolyte solution. Therefore, it is possible to prevent or reduce the distal end functional layer from discoloring by minimizing or reducing the reaction between the electrolyte solution and the ceramic.

While FIG. 4 shows that the step compensation layer 80 is a single layer, it is not limited thereto, and in order to fill the empty space having different widths due to size differences between the lower functional layer 12 and the first active material layer 13, the step compensation layer 80 may have a stepped structure, as shown, for example, in FIG. 5.

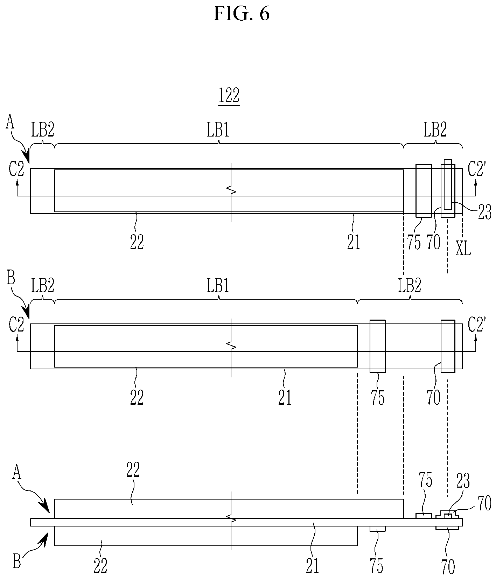

FIG. 6 includes plan views and a cross-sectional view of a second electrode of the electrode assembly shown in FIG. 2, according to one or more embodiments of the present disclosure.

The plan views of FIG. 6 include a plan view of one surface A and the other surface B of the second electrode, and the cross-sectional view is a cross-sectional view taken along the line C2-C2' of FIG. 6, according to one or more embodiments of the present disclosure.

Referring to FIG. 6, the second electrode active part LB1 includes a second substrate 21 and a second active material layer 22 formed on the second substrate 21.

The second active material layer 22 is formed on a surface (e.g., one or both surfaces (e.g., opposite surfaces)) of the substrate, such that the lengths of the second electrode active part LB1 formed on one surface A and the other surface B of the substrate 21 may be different.

The second electrode uncoated region LB2 is respectively arranged at the front end and distal end of the second electrode, and a separate material layer is not formed on the second substrate 21, so the surface of the second substrate 21 may be exposed, and a second electrode tab 23 for drawing current to the outside may be connected to the second substrate 21.

The second electrode tab 23 may be connected to the second electrode uncoated region LB2 by ultrasonic welding, laser welding, or resistance welding, and may protrude out of the second electrode uncoated region LB2. The second electrode tab 23 may be made of nickel.

The protective tape 70 may be formed on the second electrode tab 23, and the protective tape 70 may also be formed on the other surface B of the substrate 21 on which the second electrode tab 23 is not formed. A protective tape 75 may also be attached to portions where substrates of different polarities may come into contact in the wound state, thereby preventing or reducing (e.g., protecting from) short circuits.

The second substrate 21 provides a passage for the movement of charges generated in the second active material layer 22 and supports the second active material layer 22.

The second electrode 122 may be a negative electrode, and the second substrate 21 may have a structure of a thin metal plate with excellent or suitable conductivity-for example, copper foil, nickel foil, or mesh. The second active material layer 22 may be formed by dispersing an electrode mixture containing a negative active material, binder, conductive material, and/or the like in a solvent to form a slurry, which is then applied to at least one surface of the second substrate 21, followed by drying and compression.

The negative active material of the second active material layer 22 may be a material capable of reversibly intercalating/deintercalating lithium ion, lithium metal, an alloy of lithium metal, a material capable of doping and dedoping lithium, and/or a transition metal oxide.

Materials capable of reversibly intercalating/deintercalating the lithium ion may be, for example, carbon materials-that is, carbon-based negative active materials generally used in lithium secondary batteries. Representative examples of carbon-based negative active materials include crystalline carbon, amorphous carbon, and/or a (*e.g*., any suitable) combination thereof. Examples of the crystalline carbon include graphite, such as natural or artificial graphite in amorphous, sheet, flake, spherical or fiber form, and examples of the amorphous carbon include soft carbon or hard carbon, mesophase pitch carbide, fired coke, and/or the like.

The lithium metal alloy may be lithium and an alloy of metals, the metals being selected from the group consisting of Na, K, Rb, Cs, Fr, Be, Mg, Ca, Sr, Si, Sb, Pb, In, Zn, Ba, Ra, Ge, Al, Sn, and combinations thereof.

The material capable of doping and dedoping lithium may be Si, SiOₓ (0 < x ≤ 2), Si-Q alloy (wherein Q is an element selected from among an alkali metal, an alkaline-earth metal, a Group 13 element, a Group 14 element, a Group 15 element, a Group 16 element, a transition metal, a rare earth element, and/or a (*e.g*., any suitable) combination thereof, but not Si), an Si-carbon composite, Sn, SnOₓ (0 < x ≤ 2 ) (e.g., SnO₂), Sn-R (wherein R is an element selected from among an alkali metal, an alkaline-earth metal, a Group 13 element, a Group 14 element, a Group 15 element, a Group 16 element, a transition metal, a rare earth element, and/or a (*e.g*., any suitable) combination thereof, but not Sn), an Sn-carbon composite, and/or the like, and at least one of these materials may be mixed with SiO₂. The elements Q and R may each or in combination be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

Lithium titanium oxide may be used as the transition metal oxide.

Referring again to FIGs. 1 and 2, the separator 123 is arranged between the first electrode 121 and the second electrode 122, and prevents or reduces the likelihood of short circuits between the first electrode 121 and the second electrode 122.

The separator 123 may be formed of a porous film with high ion permeability and mechanical strength. For example, the separator 123 may be formed of an olefin-based polymer such as polyethylene or polypropylene. The separator may extend in the length direction or width direction, longer than the first electrode active part LA1 or the second electrode active part LB1, which may prevent or reduce the likelihood of a short circuit from occurring between the first electrode active part LA1 and the second electrode active part LB1 due to thermal contraction.

The electrode assembly 100 may be contained in the pouch-type or kind case 200 together with the electrolyte. The pouch-type or kind case may be formed of a laminated exterior material. As show, for example, in FIG. 1, the exterior material includes a lower exterior material 201 and an upper exterior material 202, and the electrode assembly 100 is arranged between the lower exterior material 201 and the upper exterior material 202 and then sealed by heat fusion.

The laminated exterior material may be formed in a multi-layer structure having, for example, a first insulating layer 2, a metal layer 3, and a second insulating layer 4. Various other adhesive layers or functional layers may be added.

The first insulating layer 2 may be formed of a material having insulating and thermally adhesive properties on the inner surface of the laminated exterior material, and may be sealed by thermo-bonding the edges while the electrode assembly 100 is accommodated. Additionally, the first insulating layer 2 is formed on one surface of the metal layer 3, and forms the inner side of the laminated exterior material facing the electrode assembly 100. The first insulating layer 2 may be formed of cast polypropylene (CPP) or equivalent thereof, which does not react with the electrolyte solution.

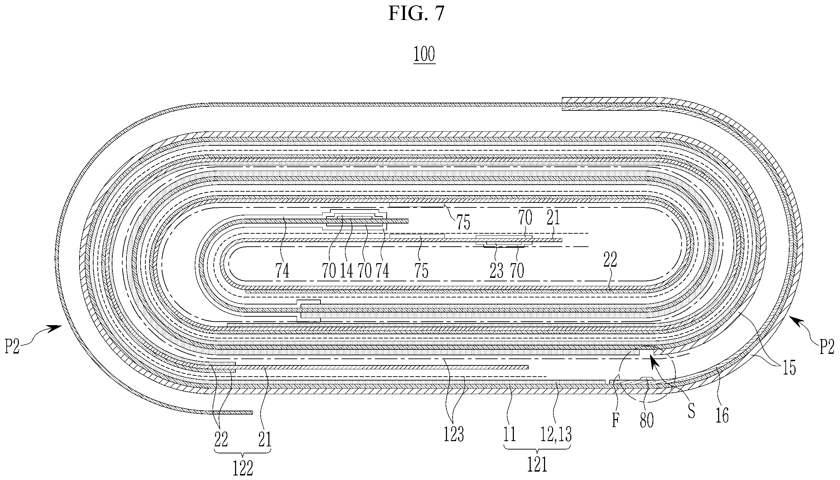

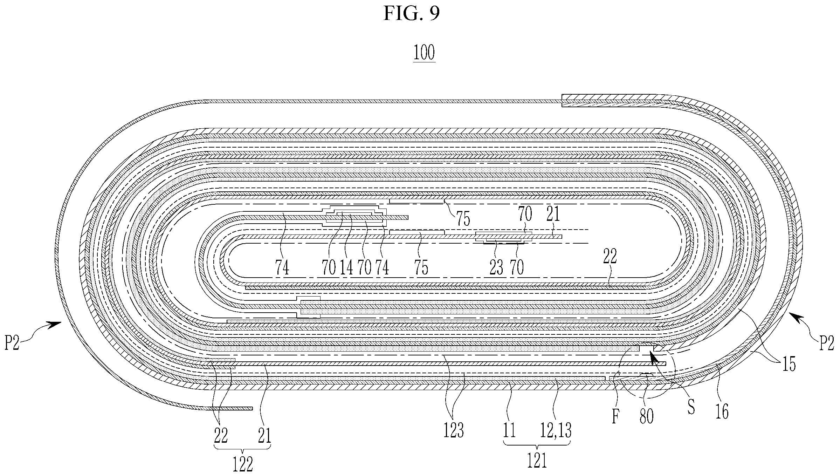

In the above embodiment, the first electrode is wound at least once without the separator and the second electrode at the outermost part of the electrode assembly, but the present disclosure is not limited thereto, and the separator or the second electrode may be arranged at the outermost part of the electrode assembly, as shown, for example, in FIGs. 7 and 9.

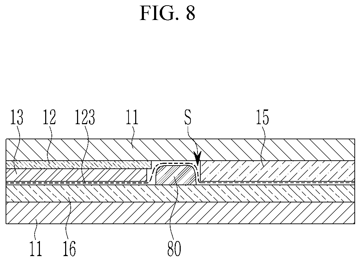

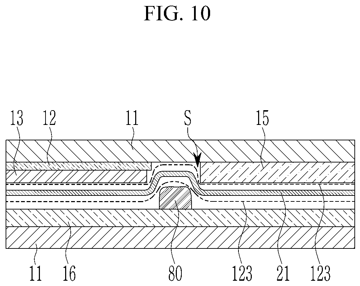

FIGs. 7 and 9 are each a cross-sectional view of an electrode assembly according to one or more embodiments of the present disclosure, FIG. 8 is an enlarged cross-sectional view of a portion F of FIG. 7, according to one or more embodiments of the present disclosure, and FIG. 10 is an enlarged cross-sectional view of a portion F of FIG. 9.

FIGs. 7 to 10 may each independently be the same as the electrode assemblies of FIGs. 1 to 3, so only the different parts may be described in more detail.

As shown in FIGs. 7 to 10, the separator 123 and the first electrode uncoated region LB2 may be wound at least once at the outermost part of the electrode assembly, and the step compensation layer 80 may be inserted into the gap S between the first distal end functional layer 15 and the first active material layer 13.

At this time, the separator 123 arranged between the step compensation layer 80 and the gap S may be inserted together into the gap S, as shown, for example, in FIGs. 7 and 8, or the separator 123 and the second electrode uncoated region LB2 of the second substrate 21 arranged between the step compensation layer 80 and the gap S may be inserted together into the gap S, as shown, for example, in FIGs. 9 and 10.

Therefore, if (*e*.*g.*, when) the separator 123 and/or the second electrode uncoated region LB2 is arranged between the step compensation layer 80 and the gap S as shown in FIGs. 7 to 10, the step compensation layer 80 may not be completely inserted into the gap S due to the thickness of the separator 123 and/or the second electrode uncoated region LB2.

In this way, even if the step compensation layer 80 is not completely inserted, the separator 123 and/or the second electrode uncoated region LB2 fills the empty space caused by the gap S, thereby preventing or reducing the likelihood of the electrolyte solution from remaining in the empty space. Therefore, it is possible to prevent or reduce discoloration due to reaction between the electrolyte solution filled in the empty space and the ceramic in the second distal end functional layer 16.

As shown in FIGs. 7 to 10, if (*e.g*., when) the separator 123 and/or the second electrode uncoated region LB2 is arranged between the step compensation layer 80 and the gap S, the height of the step compensation layer 80 may be reduced by the thickness of the separator 123 and/or the second electrode uncoated region LB2, so that the step compensation layer 80 may be completely inserted into the gap S.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

A portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

### Reference Numerals

| | | | |
|---|---|---|---|
| 11: | First substrate | 12: | First functional layer |
| 13: | First active material layer | 14: | First electrode tab |
| 15: | Second functional layer | 21: | Second substrate |
| 22: | Second active material layer | 23: | Second electrode tab |
| 70: | Protective tape | 100: | Electrode assembly |
| 121: | First electrode | 122: | Second electrode |
| 200: | Pouch | 1000: | Secondary battery |

## Claims

1. A winding-type electrode assembly (100) comprising:
a first electrode (121);
a separator (123); and
a second electrode (122),
wherein the first electrode (121) comprises:
a first substrate (11) comprising a front surface (A) and a rear surface (B);
a front first active material layer (13) arranged on the first substrate (11) and facing the front surface (A) and a rear first active material layer (13) arranged on the first substrate and facing the rear surface (B);
a first end functional layer (15) on the front surface (A) and spaced from the front first active material layer (13), such that a gap (S) between the front first active material layer (13) and the first end functional layer (15) is formed, and a second end functional layer (16) on the rear surface (B) and spaced from the rear first active material layer (13); and
a step compensation layer (80) on the second end functional layer (16), and
wherein the second end functional layer (16) is wound around the electrode assembly (100) at least once, such that the gap (S) is arranged corresponding to the step compensation layer (80).

2. The electrode assembly (100) as claimed in claim 1, wherein the step compensation layer (80) is made of the same material as the second end functional layer (16).

3. The electrode assembly (100) according to any of the previous claims,
wherein the first end functional layer (15) and the second end functional layer (16) comprise a ceramic material.

4. The electrode assembly (100) according to any of the previous claims,
wherein a thickness of the step compensation layer (80) is equal to or smaller than a thickness of the front first active material layer (13).

5. The electrode assembly (100) according to any of the previous claims, further comprising an intermediate functional layer (12),
wherein the intermediate functional layer (12) is between the first substrate (11) and the front first active material layer (13), and is also between the first substrate (11) and the rear first active material layer (13).

6. The electrode assembly (100) as claimed in claim 5, wherein the intermediate functional layer (12) is larger than the front first active material layer (13) and the rear first active material layer (13), respectively, and extends from the front first active material layer (13) and the rear first active material layer (13) toward the first end functional layer (15) and the second end functional layer (16), respectively.

7. The electrode assembly (100) according to any of the previous claims,
wherein the step compensation layer (80) is formed in multiple stages.

8. The electrode assembly (100) according to any of the previous claims,
wherein the separator (123) is wound around the electrode assembly (100) at least once together with the second end functional layer (16), and is between the gap (S) and the step compensation layer (80).

9. The electrode assembly (100) according to any of the previous claims, wherein an electrode uncoated region of the second electrode (122) is wound around the electrode assembly (100) at least once together with the second end functional layer (16) and the separator (123), and is between the gap (S) and the step compensation layer (80).

10. The electrode assembly (100) according to any of the previous claims, wherein the step compensation layer (80) decreases in width as the step compensation layer (80) extends away from the first substrate (11).

11. The electrode assembly (100) according to any of the previous claims, wherein
the first electrode (121) is a positive electrode, and
the second electrode (122) is a negative electrode.

12. The electrode assembly (100) according to any of the previous claims, wherein
the step compensation layer (80) has a stepped structure.

13. A secondary battery (1000) comprising:
the electrode assembly (100) as claimed in any of claims 1 to 12,
a case (200) accommodating the electrode assembly (100); and
an electrolyte.
